# EUROPEAN PATENT APPLICATION

(11) **EP 2 262 287 A1**
(43) Date of publication of application: **15.12.2010**
(21) Application number: 08757800.1
(22) Date of filing: 20.06.2008
(51) Int. Cl.: H04W 4/00

(54) **METHOD, SYSTEM AND DEVICE FOR CONNECTION ESTABLISHMENT BASED ON LTE/SAE SYSTEM**

(30) Priority: 01.02.2008 CN 200810006849
(71) Applicant: ZTE Corporation, Shenzhen, Guangdong 518057 (CN)
(72) Inventor: ZHAI, Hengxing, Guangdong 518057 (CN); LIU, Lin, Guangdong 518057 (CN)
(74) Representative: Jansen, Cornelis Marinus
(86) International application number: PCT/CN2008/071391
(87) International publication number: WO 2009/100628

(57) **Abstract**

A method, system and device for establishing connection based on a LTE/SAE system. First, e-NodeB sends an S1 SETUP REQUEST message to the MME, to initialize the establishment of the S1 connection; then, MME responds an S1 SETUP RESPONSE message to the e-NodeB, in response to the S1 SETUP REQUEST message, carrying the MME identification in the S1 SETUP RESPONSE message.

## Description

### Field of the Invention

The present invention relates to a flow for establishing connection among network elements in mobile communication field, particularly, to a method, system and device for establishing connection based on LTE/SAE (Long Term Evolution/System Architecture Evolution) system.

### Background of the Invention

With the development of the flat network architecture and the emergence of various mobile access modes of high-speed broadband network, the evolved wireless communication system can provide a higher transmission rate with a lower cost and a shorter transmission delay, and support the mobility among the internal access systems of the 3GPP (3rd Generation Partnership Project) and that between the access system of 3GPP and the access system of non-3GPP or the like. Just under this background, it is driven to propose the next generation architecture concept of the LTE/SAE for the mobile communication network.

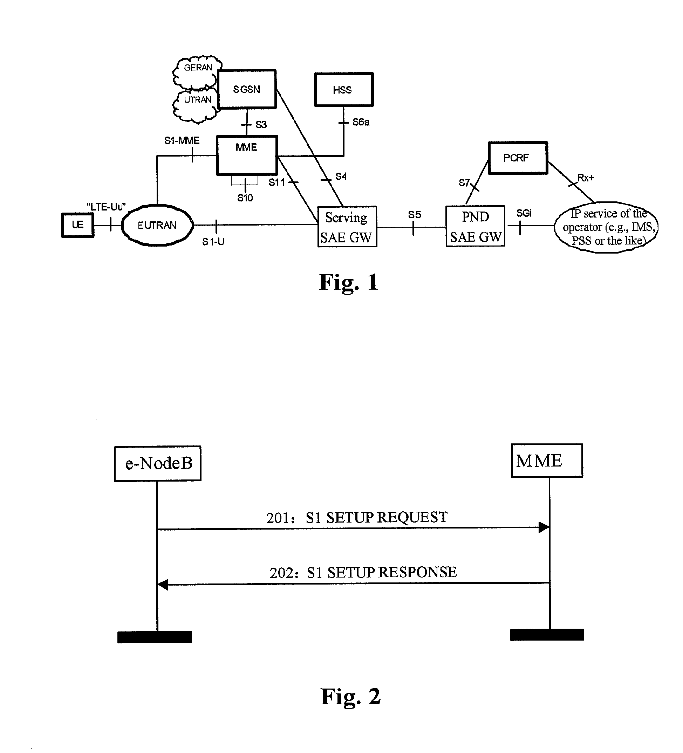

Fig.1 shows a current SAE framework. As shown in Fig.1, the current SAE architecture comprises the following network elements:
EUTRAN (Evolved UMTS (Universal Mobile Telecommunications System) Terrestrial Radio Access Network): the radio access network of next generation, can provide a higher uplink/downlink rate, a lower transmission delay, and more reliable wireless transmission.

MME (Mobility Management Entity): a control plane function entity, responsible for managing and storing UE (User Equipment) contexts (e.g., UE identification, mobility management state, user security parameters or the like), distributing a temporary identification for a user, authenticating the user when the UE resides in a tracking region or a network, and connecting with the EUTRAN via S1-MME.

GW (Gate-Way): a user plane function entity, and is used for performing the process of the user plane data routing, and may be classified into two types a Serving GW and a PDN (Public Data Network) GW; wherein the Serving GW is the mobile anchor point between the SAE system and the traditional 3GPP system, and among the e-NodeBs (evolved NodeB, abbreviated as eNB), connects with the EUTRAN via S1-U and connects with the SGSN (service GSN) via S4; the PDN GW is responsible for the gateway function for a UE to access to the PDN, and is the mobility anchor point between the access system of non-3GPP and 3GPP,, which connects with the Serving GW via S5, connects with the PCRF (Policy Control and Charging Rules Function) via S7, and connects with the IP service of the operator via SGi.

As the accessing and bearing network of the PDN, the LTE/SAE network has the function of activating, maintaining, deactivating, and bearing, and at the same has the function of continuously providing the switch of the data service for the mobile user.

Wherein, the interfaces related to the EUTRSN comprises an S1 interface, an X2 interface, and a Uu interface. Wherein the S1 interface is the interface between the EUTRAN and a network side, which can be classified into the S1-MME (the interface between the EUTRAN and the MME) and the S1-U (the interface between the EUTRAN and the SAE GW); the X2 interface is the interface among the e-NodeBs, which belongs to the internal interface of the EUTRAN; the Uu interface is the interface between the UE and the EUTRAN.

In order to adapt to the development of the future mobile communication, particularly to the mobile Self Organizing Network that will emerge in the future mobile communication, the 3GPP proposes to support a flow of establishing connection among the network elements in the SAE/LTE architecture, and the application layer data can be exchanged among the network elements after the accomplishment of the establishment of transmission connection by the flow, so as to ensure the correctness of the subsequent flow.

The flow is generally referred to as S1 Setup flow and is initiated by the e-NodeB to establish S1 connection with the MME. Fig.2 shows the detailed process of the flow. As shown in Fig.2, it specifically comprises the following processes:
201. the e-NodeB sends an S1 SETUP REQUEST message to the MME to initialize the establishment of the S1 connection, the message comprises a message type, an e-NodeB identification, a supported TAI (Tracking Area Identity) or the like;
202. after receiving the S1 SETUP REQUEST, the MME responds an S1 SETUP RESPONSE message to the e-nodeB, the message comprises the message type, a MME name, a supported PLMN (Public Land Mobile Network) or the like.

In the above flow, the responded S1 SETUP RESPONSE message sent to the base station by the MME carries the MME name, but actually, after the base station receives the S1 SETUP RESPONSE message, it cannot determine from which MME the message is sent only according to the MME name, and also cannot correctly perform the exchange of the application layer data.

### Summery of the Invention

The present invention is proposed in consideration the problem that during the process in the related art that the connection among the networks is established in the SAE/LTE architecture, particularly during the process that the e-NodeB establishes an S1 connection with the MME, the e-NodeB cannot precisely determine which MME sends the message. Therefore, the object of the present invention is to provide a method, system and device for establishing connection based on the LTE/SAE system, which can solve the above problems.

According to one aspect of the present invention, a method for establishing connection based on the LTE/SAE system is provided, which is used to establish the S1 connection between the e-NodeB and the MME.

The method for establishing connection based on the LTE/SAE system according to the embodiment of the present invention, comprises the following process: the e-NodeB sends an S1 SETUP RESPONSE message to the MME, to initialize the establishment of the S1 connection; then, the MME responds an S1 SETUP RESPONSE message to the e-NodeB, in response to the S1 SETUP RESPONSE message, and carries the MME identification in the S1 SETUP RESPONSE message

Wherein, the above method further comprises: the e-NodeB determines the MME which sends the S1 SETUP RESPONSE message according to the MME identification.

Wherein, the above method further comprises: the e-NodeB obtains information from the MME which is determined.

Wherein, the above S1 SETUP REQUEST message carries the following information: a message type, an e-NodeB identification, and a supported tracking area identity; the above S1 SETUP RESPONSE message further carries the following information: the message type, and a supported identification of public land mobile network.

According to another aspect of the present invention, a system for establishing connection based on the LTE/SAE system is further provided, which comprises an e-NodeB and a plurality of MMEs.

The system for establishing connection based on the LTE/SAE system according to the embodiment of the present invention, the e-NodeB is configured to send an S1 SETUP REQUEST message to the MME, to initialize the establishment of the S1 connection; the MME is configured to receive the S1 SETUP REQUEST message, and to return an S1 SETUP RESPONSE message, which carries the MME identification, to the e-NodeB.

Wherein, the above e-NodeB is further configured to receive the S1 SETUP RESPONSE message, and determine the MME which sends the S1 SETUP RESPONSE message according to the MME identification.

In addition, the above e-NodeB is further configured to obtain information from the MME which is determined.

Wherein, the above S1 SETUP REQUEST message carries the following information: a message type, an e-NodeB identification, and a supported tracking area identity; the S1 SETUP RESPONSE message further carries the following information: the message type, and a supported identification of public land mobile network.

According to another aspect of the present invention, a device for establishing connection based on the LTE/SAE system is provided, which is used for establishing an S1 connection between an e-NodeB and an MME.

The device for establishing connection based on the LTE/SAE system according to the embodiment of the present invention comprises: a request message sending module, arranged at the e-NodeB side, configured to send an S1 SETUP REQUEST message to the MME, to initialize the establishment of S1 connection; a response message sending module, arranged at the MME side, configured to return an S1 SETUP RESPONSE message to the e-NodeB, and carry an MME identification, in the S1 SETUP RESPONSE message.

Through at least one of the above technical schemes of the present invention, compared with the related art, by carrying MME identification information in the SETUP RESPONSE message, the e-NodeB can determine the MME which sends the S1 SETUP RESPONSE message, so as to precisely obtain the information of MME after the establishment of the connection.

Other features and advantages of the present invention will be detailed in the following description, and partly obvious from the description, or can be understood through implementing the present invention. The purposes and other advantages can be realized and obtained through the structure specified by the specification, claims and drawings.

### Brief Description of the Drawings

Drawings are provided for the further understanding of the present invention and form a part of the specification, which are used to explain the present invention with embodiments of the present invention rather than limit the present invention. In the drawings:
Fig.1 is a schematic diagram of the SAE architecture according to the related art;
Fig.2 is a flowchart of the signaling interaction in the process for establishing S1 connection according to the related art;
Fig.3 is a flowchart of a method for establishing connection based on the LTE/SAE system according to the method embodiment of the present invention;
Fig.4 is a flowchart of the signaling interaction of the method shown in Fig.3;
Fig.5 is a structure schematic diagram of a system for establishing connection based on the LTE/SAE system according to the system embodiment of the present invention;
Fig.6 is a structure schematic diagram of a device for establishing connection based on the LTE/SAE system according to the device embodiment of the present invention.

### Detailed Description of the Embodiments

As mentioned above, in the current method for establishing connection among the network elements based on the LTE/SAE system, with regard to the process for establishing an S I connection between an e-NodeB and an MME, since the e-NodeB cannot determine the MME which returns the response message, so that it cannot precisely obtain the exchange message from the MME.

In view of this, the present invention provides a method, system and device for establishing connection among the network elements based on the LTE/SAE system. In the technical schemes provided by embodiments of the present invention, identification information is added to the response message to identify the MME based on the prior art, so as to solve the above problem existed in the related art.

The preferred embodiments of the present invention will be described hereinafter in connection with drawings. It should be understood that, the description of the preferred embodiments herein are only used to describe and explain the invention but not to limit the present invention.

### Method Embodiment

According to the embodiment of the present invention, first a method for establishing connection based on the LTE/SAE system is provided, which is used to establish an S1 connection between an e-NodeB and an MME.

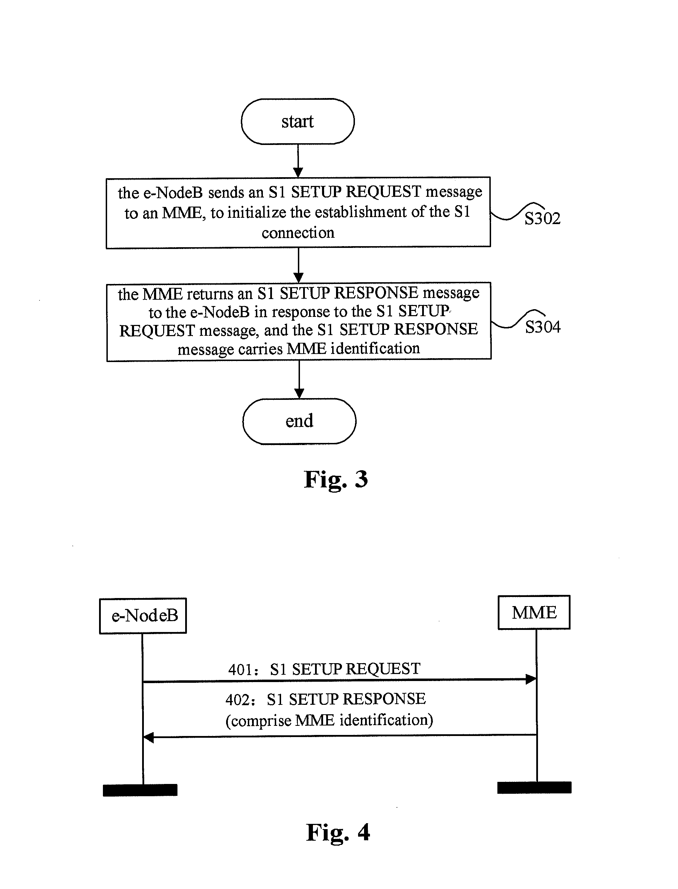

Fig.3 is a flowchart of a method for establishing connection based on the LTE/SAE system according to the method embodiment of the present invention, Fig.4 shows accordingly the interaction flow of the method. As shown in Fig.3, the method can comprise the following process:
Step S302, the e-NodeB sends an S1 SETUP REQUEST message to the MME to initialize the establishment of the S1 connection (corresponding to 401 in Fig.4);
Step S304, the MME returns an S1 SETUP RESPONSE message to the e-NodeB in response to the S1 SETUP REQUEST message, and carries the MME identification in the S1 SETUP RESPONSE message (corresponding to 402 in Fig.4).

In this way, after receiving the S1 SETUP RESPONSE message, the e-NodeB can determine the MME which sends the S1 SETUP RESPONSE message according to the MME identification; and then obtain the exchange information from the MME determined after the establishment of the connection.

In addition, the above S1 SETUP REQUEST message carries the following information: a message type, an e-NodeB identification, and a supported tracking area identity (TAI for short) or the like; the above S1 SETUP RESPONSE message further carries the following information: a message type, and a supported identification of public land mobile network (PLMN for short) or the like.

In the above embodiment, base on the prior art method, the MME identification is added, which overcomes the defect existed in the related art that the e-NodeB cannot determine the MME which sends the response message and cannot precisely obtain the exchange information.

### System Embodiment

According to the embodiment of the present invention, a system for establishing connection based on the LTE/SAE system is further provided.

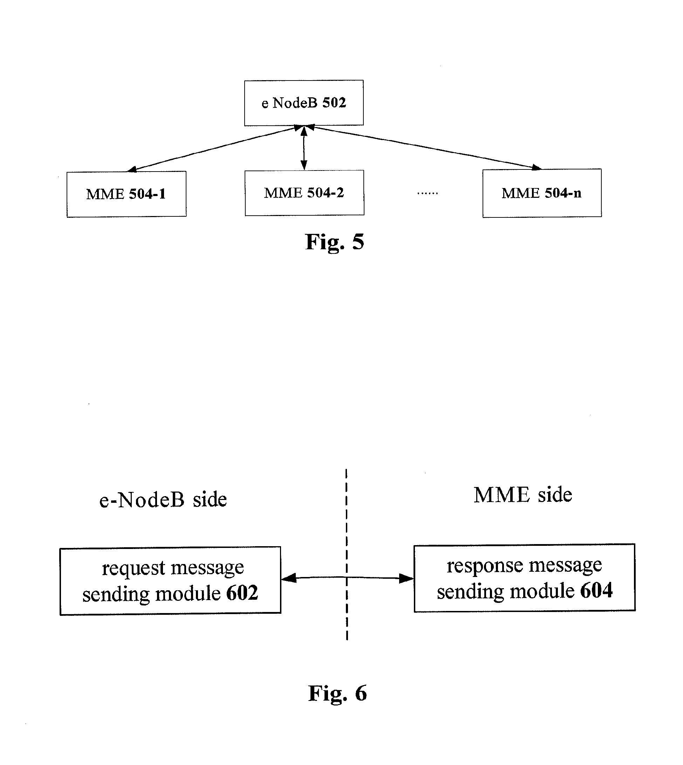

Fig.5 shows a structure schematic diagram of a system for establishing connection based on the LTE/SAE system according to the embodiment of the present invention, as shown in Fig.5, the system comprises an e-NodeB 502 and a plurality of MMEs 504, Fig.5 shows MME 504-1 to MME 504-n.

In the above system, the e-NodeB is configured to send an S1 SETUP REQUEST message to the MME to initialize the establishment of the S1 connection; the MME is configured to receive the S1 SETUP REQUEST message, and to return an S1 SETUP RESPONSE message, which carries the MME identification, to the e-NodeB.

In addition, the above e-NodeB is further configured to receive the S1 SETUP RESPONSE message, and determine the MME which sends the S1 SETUP RESPONSE message according to the MME identification, so as to obtain exchange information (e.g., it can include data) from the determined MME.

Wherein, the above S1 SETUP REQUEST message carries the following information: a message type, an e-NodeB identification, and a supported tracking area identity or the like; the S1 SETUP RESPONSE message further carries the following information: a message type, and a supported identification of public land mobile network or the like.

In the foregoing embodiment, base on the current system, the MME is configured to add the MME identification in the returned RESPONSE message, which overcomes the defect existed in the related art that the e-NodeB cannot determine the MME which sends the response message and cannot precisely obtain the exchange information.

### Device Embodiment

According to the embodiment of the present invention, a device for establishing connection based on the LTE/SAE system is further provided, which is used to establish S1 connection between the e-NodeB and the MME.

As shown in Fig.6, the device for establishing connection based on the LTE/SAE system according to the embodiment of the present invention comprises: a request message sending module **602** and a response message sending module **604.**

Wherein, the request message sending module **602,** arranged on the e-NodeB side, is configured to send an S1 SETUP REQUEST message to the MME, to initialize the establishment of S1 connection; the response message sending module **604,** arranged on the MME side, is configured to return an S1 SETUP RESPONSE message to the e-NodeB and carry an MME identification in the S1 SETUP RESPONSE message.

Thereafter, the e-NodeB can determine the MME which sends the S1 SETUP RESPONSE message according to the MME identification in the S1 SETUP RESPONSE message, thus to obtain the exchange information from the determined MME, so as to remedy the defect existed in the related art.

As mentioned above, through at least one of the technical schemes of the present invention, compared with the related art, by including MME identification information in the SETUP RESPONSE message, the e-NodeB can determine the MME which sends the S1 SETUP RESPONSE message, so as to precisely obtain the information of MME after the establishment of the connection.

Above description is to illustrate the preferred embodiments not limit the present invention. Various alterations and changes to the present invention are apparent to those skilled in the art. The scope defined in claims shall comprise any modification, equivalent substitution and improvement in the spirit and principle of the present invention.

## Claims

1. A method for establishing connection based on a Long Term Evolution/System Architecture Evolution, LTE/SAE, system, which is used for establishing an S1 connection between an evolved NodeB, e-NodeB, and a Mobility Management Entity, MME, **characterized in that**, the method comprises:
the e-NodeB sending an S1 SETUP REQUEST message to the MME, to initialize the establishment of the S1 connection;
the MME returning an S1 SETUP RESPONSE message to the e-NodeB in response to the S I SETUP REQUEST message, and carrying the MME identification in the S1 SETUP RESPONSE message.

2. The method according to claim 1, **characterized in that** the method further comprises:
the e-NodeB determining the MME which sends the S1 SETUP RESPONSE message according to the MME identification.

3. The method according to claim 1, **characterized in that** the method further comprises:
the e-NodeB obtaining information from the MME which is determined.

4. The method according to any one of claims 1 to 3, **characterized in that** the S1 SETUP REQUEST message carries the following information: a message type, an e-NodeB identification, and a supported tracking area identity.

5. The method according to any one of claims 1 to 3, **characterized in that** the S1 SETUP RESPONSE message further carries the following information: the message type, and a supported identification of public land mobile network.

6. A system for establishing connection based on a Long Term Evolution/System Architecture Evolution, LTE/SAE, system, which comprises an evolved NodeB, e-NodeB, and a plurality of Mobility Management Entities, MMEs, **characterized by**,
the e-NodeB is configured to send an S1 SETUP REQUEST message to the MME, to initialize the establishment of the S1 connection;
the MME is configured to receive the S1 SETUP REQUEST message, and to return an S I SETUP RESPONSE message, which carries the MME identification, to the e-NodeB.

7. The system according to claim 6, **characterized in that** the e-NodeB is further configured to receive the S1 SETUP RESPONSE message, and determine the MME which sends the S1 SETUP RESPONSE message according to the MME identification.

8. The system according to claim 7, **characterized in that** said e-NodeB is further configured to obtain information from the MME which is determined.

9. The system according to any one of claims 6 to 8, **characterized in that** the S1 SETUP REQUEST message carries the following information: a message type, an eNodeB identification, and a supported tracking area identity; the S1 SETUP RESPONSE message further carries the following information: the message type, and a supported identification of public land mobile network.

10. A device for establishing connection based on a Long Term Evolution/System Architecture Evolution, LTE/SAE, system, which is used for establishing an S1 connection between an evolved NodeB, eNodeB, and a Mobility Management Entity, MME, **characterized in that**, the device comprises:
a request message sending module, arranged at the e-NodeB side, configured to send an S1 SETUP REQUEST message to the MME, to initialize the establishment of S1 connection;
a response message sending module, arranged at the MME side, configured to return an S1 SETUP RESPONSE message to the e-NodeB, and carry an MME identification in the S1 SETUP RESPONSE message.
